# EUROPÄISCHE PATENTSCHRIFT

(11) **EP 1 246 288 B1**
(45) Veröffentlichungstag und Bekanntmachung des Hinweises auf die Patenterteilung: **22.02.2012**
(21) Anmeldenummer: 02405146.8
(22) Anmeldetag: 01.03.2002
(51) Int. Cl.: H01M 8/12, C25B 1/04

(54) **Poröser, gasdurchlässiger Schichtunterbau zu einer dünnen, gasdichten Schicht, zur Verwendung als funktionelle Komponente in Hochtemperatur-Brennstoffzellen**
Porous gas-permeable substructure layer of a thin gas impervious layer for use as functional component in high temperature fuel cells
Sous-couche poreuse perméable aux gaz d'une couche mince imperméable aux gaz, servant de composant fonctionnel dans les piles à combustible fonctionnant à haute température

(30) Priorität: 28.03.2001 EP 01810312
(43) Veröffentlichungstag der Anmeldung: 02.10.2002
(73) Patentinhaber: Hexis AG, 8404 Winterthur (CH)
(72) Erfinder: Kaiser, Andreas Franz-Josef Dr., 8353 ELgg (CH); Honegger, Kaspar, Dr., 8360 Wallenwil (CH); Batawi, Emad, Dr., 8400 Winterthur (CH)
(74) Vertreter: Sulzer Management AG

(56) Entgegenhaltungen:
- EP-A- 0 510 820
- EP-A- 0 788 175
- WO-A-01/57945
- PATENT ABSTRACTS OF JAPAN vol. 015, no. 308 (E-1097), 7. August 1991 (1991-08-07) -& JP 03 112058 A (OSAKA GAS CO LTD), 13. Mai 1991 (1991-05-13) -& CHEMICAL ABSTRACTS + INDEXES, XP000254928

## Beschreibung

Die Erfindung betrifft einen porösen, gasdurchlässigen Schichtunterbau zu einer dünnen, gasdichten Schicht gemäss Oberbegriff von Anspruch 1, welcher Schichtunterbau zur Verwendung insbesondere als eine funktionale Komponente in Hochtemperatur-Brennstoffzellen vorgesehen ist. Die Erfindung bezieht sich auch auf ein elektrochemisch aktives Element für Brennstoffzellen und ein Verfahren zum Herstellen des Schichtunterbaus.

In Hochtemperatur-Brennstoffzellen werden auf elektrochemisch aktiven Membranen Elektrodenreaktionen zur Erzeugung eines elektrischen Stroms durchgeführt: nämlich eine reduzierende Reaktion auf der Anode, bei der aus Wasserstoff und Kohlenmonoxid eines ersten Gasstroms Wasser bzw. Kohlendioxid entstehen; und eine oxidierende Reaktion auf der Katode, bei der aus molekularem Sauerstoff eines zweiten Gasstroms ionischer Sauerstoff O²⁻ - unter Aufnahme von Elektronen aus einem metallischen Leiter - gebildet wird. Die Sauerstoffionen bewegen sich durch einen Festelektrolyten, der die beiden Elektroden gasdicht trennt und der bei Temperaturen über 700 °C für die Sauerstoffionen leitend ist. Es erfolgt die reduzierende Anodenreaktion mit den Sauerstoffionen unter Abgabe von Elektronen an einen weiteren metallischen Leiter, der eine Verbindung zu einer benachbarten elektrochemisch aktiven Membran oder zu einem Batteriepol herstellt. Die elektrochemisch aktive Membran ist ein Mehrschichtensystem, bei deren Herstellung jede Schicht als Träger für eine benachbarte Schicht verwendet werden kann, wobei diese benachbarte Schicht mittels einer Dünnfilmtechnik, beispielsweise einem thermischen Spritzverfahren oder unter Anwendung eines Siebdruckverfahrens, herstellbar ist.

Aus der EP-A- 0 788 175 (= P. 6725) ist eine Hochtemperatur-Brennstoffzelle bekannt, deren Festelektrolyt als Teil einer Mehrschichtenmembran in Form einer dünnen Schicht ausgebildet ist. Solche Dünnfilm-Elektrolyte, die 10- 20 µm dick sind, lassen sich mittels eines VPS-Verfahrens (Vakuum-Plasma-Spritzverfahren) auf eine poröse Trägerstruktur aufbringen. Die Trägerstruktur, die für die Reaktanden durchlässig sein muss, ist aus einer Grundschicht mit grossen Poren und einer Deckelschicht mit feinen Poren zusammengesetzt. Sie bildet den Unterbau zu den weiteren Schichten des elektrochemisch aktiven Elements. Die Deckelschicht kann aus einem Schlicker und mittels einem Bandgiessverfahren ("tape casting") zu einer dünnen Folie ausgewalzt, anschliessend auf die Grundschicht aufgebracht und mit dieser durch Sintern verbunden werden.

Die Trägerstruktur hat in einer bevorzugten Form ausser ihrer mechanischen Funktion als Träger auch eine elektrochemische Funktion als Elektrode sowie eine elektrische Funktion als guter Leiter. Auf die Festelektrolytschicht lässt sich mittels eines Siebdruckverfahrens und unter Verwendung eines Schlickers das Material für die Katodenschicht auftragen. Dieses Material wird anschliessend durch Sintern in eine funktionstüchtige Schicht weiter umgewandelt.

Aufgabe der Erfindung ist es, einen porösen, gasdurchlässigen Unterbau zu einer dünnen, gasdichten Schicht für beispielsweise den oben genannten Zweck zu schaffen. Ein derartiger Unterbau soll insbesondere als Träger für eine Elektrodenschicht einer Hochtemperatur-Brennstoffzelle verwendbar sein. Diese Aufgabe wird durch den im Anspruch 1 definierten Schichtunterbau gelöst.

Der poröse, gasdurchlässige Schichtunterbau zu einer dünnen, gasdichten Schicht ist insbesondere als eine funktionale Komponente in Hochtemperatur-Brennstoffzellen verwendbar. Dieser Schichtunterbau weist eine glatte Oberfläche auf, die für ein Aufbringen der gasdichten Schicht oder eines die gasdichte Schicht umfassenden Mehrschichtensystems geeignet ist, wobei das Aufbringen mittels Siebdruckverfahren oder anderen Beschichtungsverfahren durchgeführt wird. Die glatte Oberfläche ist durch eine verdichtete Randzone gebildet. Die Randzone und eine zu dieser benachbarte Trägerstruktur sind aus einem einheitlichen Stoffgemisch von sinterbaren Partikeln hergestellt. Die Porosität der Trägerstruktur ist grösser als 30 Vol.-%, vorzugsweise grösser als 40 Vol.-%. Die Porengrösse der Randzone ist kleiner als 10 µm, vorzugsweise kleiner als 3 µm.

Die abhängigen Ansprüche 2 bis 4 betreffen vorteilhafte Ausführungsformen des erfindungsgemässen Schicht- oder Schichtenunterbaus. Ein elektrochemisch aktives Element ist Gegenstand der Ansprüche 5 und 6. Die Ansprüche 7 bis 10 beziehen sich auf Verfahren zum Herstellen eines erfindungsgemässen Unterbaus.

Nachfolgend wird die Erfindung anhand der Zeichnungen erläutert. Es zeigen:
- Fig. 1: schematisch darstellt ein Aufbereitungsverfahren für einen Schlicker, der für die Herstellung des erfindungsgemässen Schichtenunterbaus vorgesehen ist,
- Fig. 2: eine erste Giessform für das erfindungsgemässe Verfahren,
- Fig. 3, 4: eine zweite sowie eine dritte Giessform,
- Fig. 5: einen Querschnitt durch das Produkt des erfindungsgemässen Verfahrens, gezeichnet nach einem mittels Rasterelektronenmikroskopie gewonnenen Bild,
- Fig. 6: eine Veranschaulichung der räumlichen Verteilung von Fasern, die in einem für das erfindungsgemässe Verfahren verwendeten Schlicker enthalten sind,
- Fig. 7: einen schematisch dargestellten Querschnitt durch eine gegossene Platte, die zwei Lagen umfasst,
- Fig. 8: einen Querschnitt durch eine zwei konzentrische Röhren umfassende Brennstoffzelle und
- Fig. 9: einen Längsschnitt durch einen Sauerstoff-Erzeuger, der im wesentlichen den gleichen Aufbau wie die Brennstoffzelle der Fig. 8 hat.

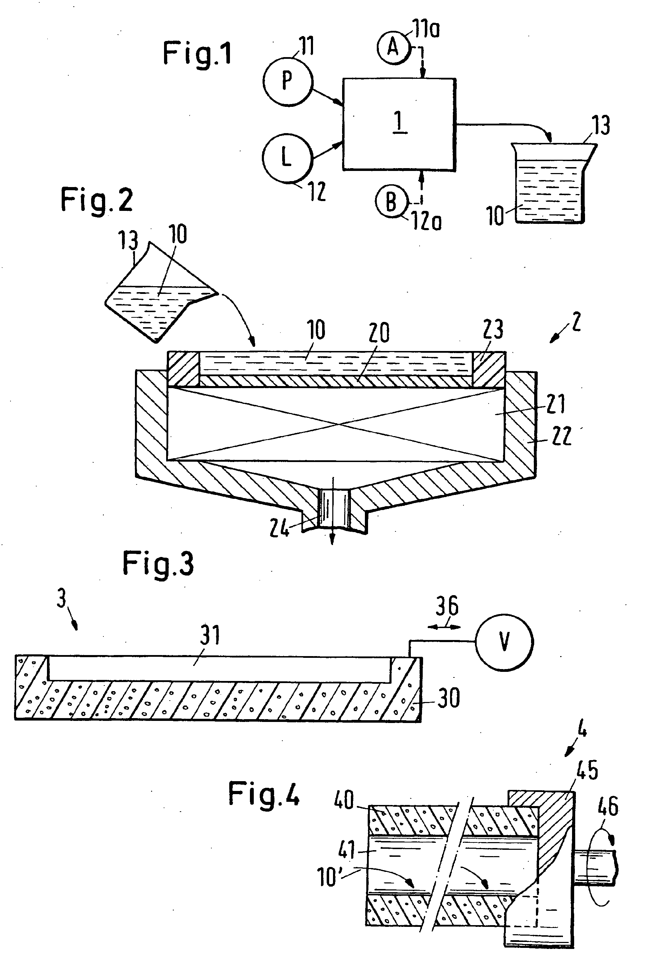

Zum Herstellen eines erfindungsgemässen Schichtunterbaus wird ein Schlicker 10 aus einem sinterbare Partikel enthaltenden Pulvergemisch 11 und einer Flüssigkeit 12 aufbereitet: siehe Fig. 1. Das Pulvergemisch 11 enthält ausser den sinterbaren Partikeln organische Komponenten, die als Porenbildner sowie Bindemittel vorgesehen sind und die bei einem Sintern in eine flüchtige Form übergehen, in der sie sich aus dem Produkt weitgehend rückstandfrei verflüchtigen. Die Flüssigkeit 12, die mit Vorteil hauptsächlich aus Wasser besteht, bildet zusammen mit mindestens einem Additiv ein Suspensionsmedium L für die Partikel des Pulvergemischs 11. Der Schlicker 10 wird vorteilhafterweise in einer Kugelmühle 1 homogenisiert. Durch den Mahlvorgang können einzelne für den Schlicker vorgesehene Komponenten 11a oder 12a eine Qualitätseinbusse erleiden. Diese Komponenten - in fester Form A oder flüssiger Form B - werden mit Vorteil erst gegen Ende des Mahlvorgangs dem Gemisch beigefügt. Von dem so aufbereiteten Schlicker 10, in dem feste Partikel in der Flüssigkeit L suspendiert sind, wird mittels eines Gefässes 13, das beispielsweise auch eine Spritze sein kann, eine für einen weiteren Verfahrensschritt benötigte Menge abgemessen.

Der weitere Verfahrensschritt zum Herstellen des erfindungsgemässen Schichtunterbaus ist in Fig. 2 dargestellt. Der Schlicker 10 wird aus dem Gefäss 13 auf eine bezüglich der Flüssigkeit L saugfähige Form 2 aufgegossen oder aufgespritzt und dabei zu einer einheitlich dicken Lage verfestigt. Die Form 2 besteht im gezeigten Beispiel aus einer Mikrofilterfolie 20, einer Trägerstruktur 21, die beispielsweise eine Nutsche ist, einer Wandung 22 und einem Rahmen 23, der beispielsweise aus Kunststoff besteht. Über einen Absaugstutzen 24 kann in der Trägerstruktur 21 ein Unterdruck erzeugt werden, unter dessen Wirkung die Flüssigkeit L teilweise aus dem Schlicker 10 abgesaugt wird. Als Mikrofilterfolie 20 kann beispielsweise gerecktes Polytetrafluorethylen verwendet werden.

Beim Eingiessen des Schlickers in die Wanne, die durch die Mikrofilterfolie 20 und den Rahmen 23 gebildet ist, entsteht eine Lage, die sich aufgrund des Absaugens der Flüssigkeit L verfestigt. Das so entstandene Zwischenprodukt wird getrocknet, aus der Form entfernt und schliesslich gesintert. Das Produkt eignet sich als poröser, gasdurchlässiger Unterbau zu einer dünnen, gasdichten Schicht. Die von der Mikrofilterfolie 20 getrennte Oberfläche ist glatt ausgebildet; sie ist geeignet für ein Aufbringen der gasdichten Schicht oder eines die gasdichte Schicht umfassenden Mehrschichtensystems. Das Material für die gasdichte Schicht kann mittels einem Siebdruckverfahren oder anderen Beschichtungsverfahren aufgetragen werden. Die glatte Oberfläche ist durch eine verdichtete Randzone gebildet. Die Randzone sowie eine zu dieser benachbarte Trägerstruktur bestehen aus einem einheitlichen Stoffgemisch. Die Trägerstruktur hat eine Porengrösse, d. h. einen mittleren Porendurchmesser, der wesentlich grösser als die Porengrösse der Randzone ist. Die Porosität der Trägerstruktur ist grösser als 30 Vol.-%, vorzugsweise grösser als 40 Vol.-%. Die Porengrösse der Randzone ist kleiner als 10 µm, vorzugsweise kleiner als 3 µm.

Der erfindungsgemässe Schichtunterbau lässt sich auch mit einfacheren Mitteln herstellen, nämlich mit einer Giessform 3, die aus einer Platte 30 aus Gips mit einer wannenförmigen Vertiefung 31 besteht: siehe Fig. 3. Statt Gips kann auch ein anderes saugfähiges Material, beispielsweise ein poröser Kunststoff, verwendet werden, mit dem sich eine Giessform herstellen lässt, deren Vertiefung 31 eine ausreichend glatte Oberfläche aufweist. Um den Schlicker 10 gleichmässig in die Vertiefung 31 verteilen zu können und um die Ausbildung einer Randzone zu fördern, kann die Giessform 3 an einen Vibrator 35 angeschlossen werden, der beispielsweise mit einer Ultraschallschwingung 36 auf die Giessform 3 einwirkt.

Mit einem Gipsrohr 40, das sich auf einen rotierbaren Halter 45 aufsetzen lässt, kann auch ein zylindrischer Schichtunterbau hergestellt werden: siehe Fig. 4. Der Schlicker 10 wird dabei gleichmässig (Pfeile 10') auf die innere Oberfläche 41 des Rohrlumens aufgespritzt. Dank der durch eine Rotation 46 erzeugten Zentrifugalkraft verteilt sich der Schlicker gleichmässig, so dass ein Rohr mit homogener Wandstärke entsteht.

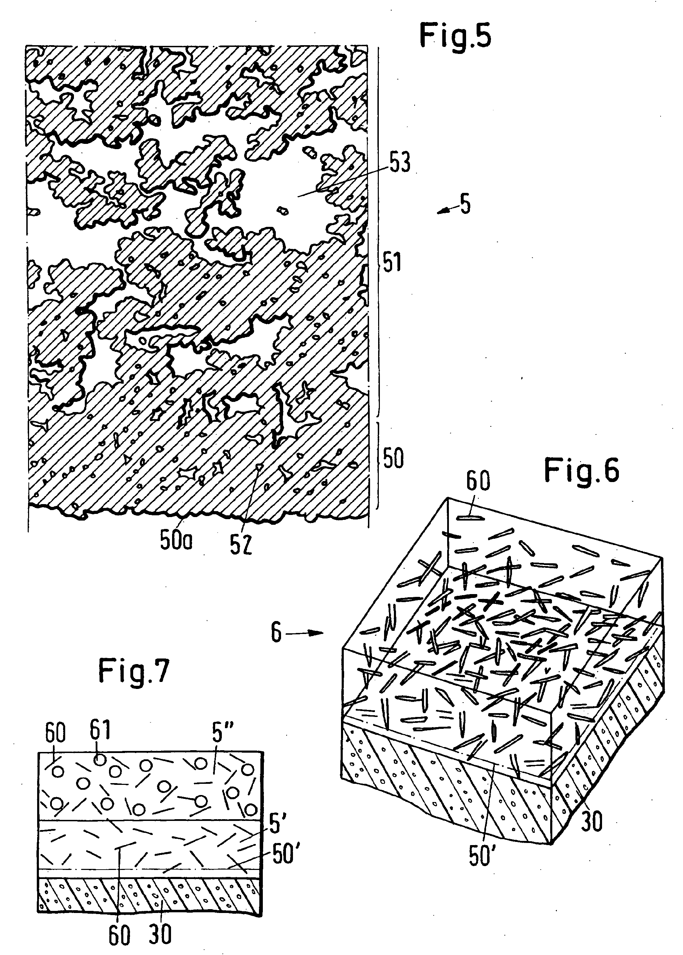

Fig. 5 zeigt einen Querschnitt durch ein Produkt 5, das erfindungsgemäss mit der Gipsform 3 der Fig. 3 hergestellt worden ist. Es ist nach einem mittels Rasterelektronenmikroskopie erhaltenen Bild gezeichnet. Eine glatte Oberfläche 50a wird durch eine Randzone 50 gebildet, die kleine, teilweise geschlossene Poren 52 enthält. Eine zu der Randzone 50 benachbarte Trägerstruktur 51 ist wesentlich poröser. Poren 53 der Trägerstruktur 51 bilden einen kommunizierenden Porenraum. Die Porosität der Randzone 50 ist kleiner als 30 Vol.-%, vorzugsweise kleiner als 10 Vol.-%. Die Dicke der Randzone 50 ist kleiner als 100 µm, vorzugsweise kleiner als 30 µm.

Die grossen Poren 53 der Trägerstruktur 51 sind mittels Porenbildnern, die beim Sintern in eine flüchtige Form übergehen, erzeugt worden. Fig. 6 zeigt eine Veranschaulichung der räumlichen Verteilung 6 von faserförmigen Porenbildnern 60, die in einem für das erfindungsgemässe Verfahren verwendeten Schlicker 10 enthalten sind. Ein saugfähiges Substrat 30 nimmt Flüssigkeit L aus dem Schlicker 10 auf. Feine Partikel des Schlickers 10 werden unter einer unterstütztenden Einwirkung der Schwerkraft mit der Flüssigkeit L zur Oberfläche des Substrats 30 getragen, wo sich eine verdichtete Randzone 50 ausbildet, deren innere Grenze mit der strichpunktiert dargestellten Linie 50' angedeutet ist. Die faserförmigen Porenbildner 60 haben eine kleinere Dichte als die sinterbaren Partikel des Pulvergemisches 11. Daher lässt sich die Randzone mittels einer Vibration (vgl. Fig. 3) dank den auf die Porenbildner 60 wirkenden Auftriebskräfte zusätzlich vergrössern.

Fig. 7 zeigt einen schematisch dargestellten Querschnitt durch eine gegossene Platte, die zwei Lagen 5', 5" umfasst. Auf die erste Lage 5' mit faserförmigen Porenbildnern 60 ist eine weitere Lage 5" mit einem zweiten Schlicker aufgebracht worden, wobei dem zweiten Schlicker ausser faserförmigen noch kugelige Porenbildner 61 zugemengt worden sind. Für die zweite Lage 5" erhält man eine grössere Porosität als für die erste. Beim Sintem verbinden sich die Lagen zu einer zusammenhängenden Struktur.

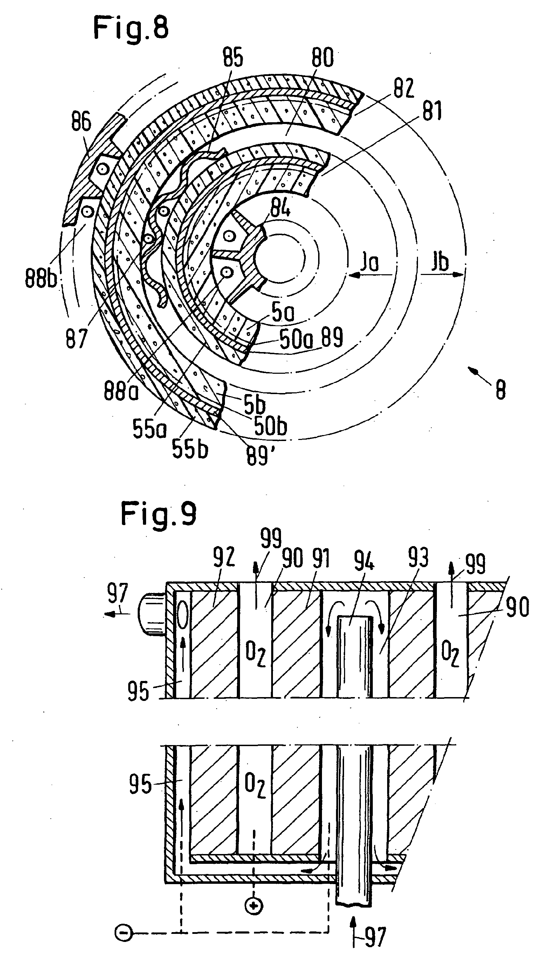

Fig. 8 zeigt einen Querschnitt durch eine Brennstoffzelle 8, die zwei elektrochemisch aktive Elemente in Form von konzentrischen Röhren 81 und 82 umfasst. In einem Ringspalt 80 zwischen den beiden Röhren 81, 82 wird ein erster Gasstrom 87 mit reduzierenden Reaktanden geführt. Ein zweiter Gasstrom, der molekularen Sauerstoff enthält und der sich aus zwei Zweigströme 88a und 88b bildet, wird über die innere Oberfläche der Röhre 81 bzw. über die äussere Oberfläche der Röhre 82 geleitet. Metallische Leiter 84, 85 und 86 dienen als Stromsammler.

Die Röhren 81 und 82 sind elektrochemisch aktive Elemente mit jeweils einem erfindungsgemässen Schichtenunterbau 5a bzw. 5b. Ein solches Element bildet ein Mehrschichtensystem, das eine Anodenschicht, eine gasdichte Festelektrolytschicht und eine Katodenschicht umfasst. Die Elektrodenschichten, d. h. entweder die Anoden- oder die Katodenschicht, sind auf der Randzone 50 des Unterbaus 5a bzw. 5b aufgebracht; oder die Randzonen 50 selber weisen die Funktion von Elektrodenschichten auf. Im Fall, dass eine zusätzliche Elektrodenschicht auf der Randzone 50 aufgebracht wird, ist es vorteilhaft, wenn der Unterbau 5a bzw. 5b im wesentlichen aus dem gleichen Stoffgemisch wie die Elektrodenschicht besteht. Bei der inneren Röhre 81 ist der erfindungsgemässe Unterbau 5a als Katode ausgebildet, auf der eine Festelektrolytschicht 89 und auf dieser eine Anodenschicht 55a aufgebracht sind; bei der äusseren Röhre 82 ist der erfindungsgemässe Unterbau 5b als Anode ausgebildet, auf der eine Festelektrolytschicht 89' und auf dieser eine Katodenschicht 55a aufgebracht sind. Die Pfeile Ja und Jb geben die Richtungen der elektrischen Ströme an, die in der Brennstoffzelle 8 erzeugt werden.

In der eingangs genannten EP-A- 0 788 175 ist eine Hochtemperatur-Brennstoffzelle mit planaren Zellen offenbart. Die elektrochemisch aktiven Elemente dieser Zellen lassen sich ebenfalls mit dem erfindungsgemässen Schichtenunterbau herstellen, wobei Giessformen gemäss den Figuren 2 und 3 verwendet werden können.

Fig. 9 zeigt einen Längsschnitt durch einen Sauerstoff-Erzeuger 9, der im wesentlichen den gleichen Aufbau wie die Brennstoffzelle 8 der Fig. 8 hat und der auch bei hohen Temperaturen arbeitet. Der Sauerstoff-Erzeuger 9 umfasst zwei elektrochemisch aktive Elemente 91, 92 und Ringspalträume 90, 93 und 95, in denen nicht dargestellte Stromsammler - entsprechend den Stromsammlern 84, 85 und 86 in Fig. 8 - angeordnet sind. Über ein zentrales Rohr 94 wird aufgeheizte Luft 97 in den inneren Ringspaltraum 93 eingespeist und von dort in den äusseren Ringspaltraum 95 weiter geleitet. Zwischen dem Ringspaltraum 90 und den Ringspalträumen 93 und 95 wird ein elektrisches Potential angelegt (durch Plus- und Minuspole angedeutet). Sauerstoffionen werden durch die Festelektrolytschichten der beiden Elemente 91 und 92 transportiert, im Ringspaltraum 90 entladen und als molekularer Sauerstoff freigesetzt. Es lässt sich so aus Luft 97 im Ringspaltraum 90 reiner Sauerstoff O₂ (Pfeil 99) gewinnen.

Ausser für Brennstoffzellen und Sauerstoff-Erzeuger lässt sich der erfindungsgemässe Schichtenunterbau auch als funktionale Komponente für ein Hochtemperatur-Elektrolysegerät verwenden, in dem aus Wasserdampf elektrolytisch Wasserstoff und Sauerstoff erzeugt wird.

Die in Fig. 5 abgebildete und als Beispiel zu verstehende Struktur ist mit einem Schlicker hergestellt worden, dessen Zusammensetzung für die Herstellung eines Anodenunterbaus geeignet ist und der durch folgende Formulierung gekennzeichnet ist:
- 175 g Nickeloxid NiO, dessen Partikel einen mittleren Durchmesser d₅₀ von 3 µm aufweisen (50 Gew.% der Partikel haben einen Durchmesser, der kleiner als d₅₀ ist).
- 75 g Zirkoniumoxid ZrO₂, das mit Yttrium Y stabilisiert ist (YSZ); d₅₀ rund 0.6 µm.
- 20 g Wasser.
- 3 g Dispergiermittel, das bereits bei bekannten keramischen Verarbeitungsverfahren angewendet wird (eine Polycarbonsäure mit der Markenbezeichnung "Dispex A40" der Firma Prochem AG).
- 50 g Bindemittel (Polyvinylacetat "Vinapas®" EZ W 36).
- 10 g Porenbildner in Form von Cellulose (aus Fichtenholz, Faserlänge 20 - 150 µm).

Schlickeraufbereitung: Wasser, Dispergiermittel, NiO- und YSZ-Pulver werden mit Zirkoniumoxid-Mahlkugeln (Durchmesser 20 mm, Gewichtsverhältnis zu Mahlgut: 2:1) auf einer Rollen-Mühle ("ball mill") während 16 Stunden zerkleinert und dispergiert. Anschliessend werden die Celluslosefasern zugegeben und weitere 2 Stunden dispergiert. Schliesslich wird das Bindemittel zugegeben und während 2 Stunden homogenisiert.

Beim Einsatz als Anode wird das Nickeloxid zu Nickel reduziert; die Porosität vergrössert sich dabei.

Bei der Herstellung einer Katodenschicht verwendet man für die sinterbaren Partikel ein Gemisch, das sich aus einem Perowskit (z. B. LaₓSr₁₋ₓMnO₃) und YSZ zusammensetzt (je rund 50 Gew.%).

Als Porenbildner können ausser Cellulosefasem auch Graphitblättchen, Kunstharzkügelchen oder ein Gemisch aus allen oder jeweils zwei der genannten Stoffe verwendet werden. Vorzugsweise werden aber Cellulosefasern und/oder ein Gemisch von Cellulosefasern und Kunstharzkügelchen verwendet.

Bei einer sogenannten ASE-Zelle (Anode Supported Electrolyte cell) befindet sich die Trägerstruktur auf der Seite des reduzierenden Brennstoffgases (H₂, CO), d.h. auf der Anodenseite. Beim Herstellen der ASE-Zelle werden die funktionalen Schichten in der Reihenfolge Anode, Elektrolyt und Katode auf den erfindungsgemässen Schichtenunterbau mittels Beschichtungsverfahren aufgebracht. Diese Mehrschichtenplatte hat eine Peripherie, die während eines stromerzeugenden Betriebs der Brennstoffzelle einem molekularen Sauerstoff enthaltenden Milieu ausgesetzt ist. Das Material des porösen Schichtenunterbaus, das weitgehend aus Nickel besteht, hat die Eigenschaft, dass es bei der Betriebstemperatur der Brennstoffzelle je nach Milieu einen oxidierten oder einen reduzierten Zustand annimmt. Die Peripherie der Mehrschichtenplatte muss daher mit einer Barriere versehen sein, die den Transport von molekularem Sauerstoff aus dem umgebenden Milieu in den Schichtenunterbau hemmt oder unterbindet. Sonst wird die ASE-Zelle, deren Schichtenunterbau während des Betriebs sich im reduzierten Zustand befindet, durch eine lokale Oxidation im Randbereich der Peripherie so verändert, dass schädigende Risse entstehen. Der Schichtenunterbau, der mittels der in Fig. 3 dargestellten Giessform hergestellt wird, erhält mit dem erfindungsgemässen Verfahren vorteilhafterweise auch an seiner Peripherie eine verdichtete Zone. Diese Zone, die sich über die ganze Höhe des Schichtenunterbaus erstreckt, hat den Vorteil, dass sie eine Barriere gegen den Transport von molekularem Sauerstoff darstellt. Die noch vorhandenen Poren können mit einem zusätzlichen Mittel versiegelt werden.

## Patentansprüche

1. Poröser, gasdurchlässiger Schichtunterbau (5; 5a, 5b) zu einer dünnen, gasdichten Schicht (89), insbesondere zur Verwendung als eine funktionale Komponente in Hochtemperatur-Brennstoffzellen (8), welcher Schichtunterbau eine glatte Oberfläche (50a) aufweist, die für ein Aufbringen der gasdichten Schicht oder eines die gasdichte Schicht umfassenden Mehrschichtensystems mittels Siebdruckverfahren oder anderen Beschichtungsverfahren geeignet ist,
**dadurch gekennzeichnet, dass** die glatte Oberfläche durch eine verdichtete Randzone (50) gebildet ist, die Randzone sowie eine zu dieser benachbarte Trägerstruktur (51) aus einem einheitlichen Stoffgemisch von sinterbaren Partikeln hergestellt sind, die Porosität der Trägerstruktur grösser als 30 Vol.-% ist, vorzugsweise grösser als 40 Vol.-% ist und die Porengrösse der Randzone kleiner als 10 µm, vorzugsweise kleiner als 3 µm ist.

2. Unterbau zu einer Schicht nach Anspruch 1, **dadurch gekennzeichnet, dass** die Porosität der Randzone (50) kleiner als 30 Vol.-% ist, vorzugsweise kleiner als 10 Vol.-%, und dass die Dicke der Randzone kleiner als 100 µm ist, vorzugsweise kleiner als 30 µm.

3. Unterbau zu einer Schicht nach Anspruch 1 oder 2, **dadurch gekennzeichnet, dass** er aus einer ersten, die Randzone (50) enthaltenden Lage (5') und mindestens einer zweiten porösen Lage (5") aufgebaut ist, wobei die Lagen zu einer zusammenhängenden Struktur gesintert sind und die zweite Lage eine grössere Porosität als die erste aufweist.

4. Unterbau zu einer Schicht nach einem der Ansprüche 1 bis 3, **dadurch gekennzeichnet, dass** er plattenförmig (5) ausgebildet ist oder dass er eine Röhrenform (81, 82) aufweist, wobei die Randzone vorzugsweise die äussere Oberfläche der Röhre (81, 82) bildet.

5. Elektrochemisch aktives Element (81, 82; 91, 92), insbesondere zu einer Hochtemperatur-Brennstoffzelle (8) oder einem Sauerstoffgenerator (9), mit einem Unterbau (5a, 5b) gemäss einem der Ansprüche 1 bis 4 und einem Mehrschichtensystem, das eine Anodenschicht (55a, 50b), eine gasdichte Festelektrolytschicht (89) und eine Katodenschicht (50a, 55b) umfasst, wobei jede der Elektrodenschichten, d. h. entweder die Anodenschicht (50b) oder die Katodenschicht (50a) durch die Randzone (50) des Unterbaus (5b, 5a) gebildet oder auf dieser aufgebracht sein kann.

6. Elektrochemisch aktives Element gemäss Anspruch 5, **dadurch gekennzeichnet, dass** die auf der Randzone (50) aufgebrachte Elektrodenschicht im wesentlichen aus dem gleichen Stoffgemisch wie der Unterbau besteht.

7. Verfahren zum Herstellen eines Unterbaus (5, 5a, 5b) gemäss einem der Ansprüche 1 bis 4, **dadurch gekennzeichnet, dass** mindestens ein Schlicker (10) aus einem Pulvergemisch (11) und einer Flüssigkeit (12, L) aufbereitet wird, dass der oder ein erster Schlicker auf eine bezüglich der Flüssigkeit saugfähigen Form (2, 3, 4) aufgegossen und dabei zu einer einheitlich dicken Lage (5, 5') verfestigt wird, dass gegebenenfalls auf die verfestigte Lage (5') eine weitere Lage (5") mit einem zweiten oder weiteren Schlicker aufgebracht wird, dass das so entstandene Zwischenprodukt getrocknet, von der Form entfernt und schliesslich gesintert wird,
wobei das Pulvergemisch sinterbare Partikel und organische Komponenten als Porenbildner und Bindemittel enthält, die beim Sintern in eine flüchtige Form übergehen, und wobei die Flüssigkeit, die insbesondere hauptsächlich aus Wasser besteht, zusammen mit mindestens einem Additiv ein Suspensionsmedium für das Pulvergemisch bildet.

8. Verfahren nach Anspruch 7, **dadurch gekennzeichnet, dass** die saugfähige Form (3, 4) aus einem porösen Material (30), insbesondere aus Gips besteht, oder dass die saugfähige Form (2) aus einem Apparat gebildet ist, der eine Absaugeinrichtung (21, 22, 23, 24) mit einer eingelegten Mikrofilterfolie (20) umfasst.

9. Verfahren nach Anspruch 7 oder 8, **dadurch gekennzeichnet, dass** als Porenbildner Cellulosefasern (60), Graphitblättchen, Kunstharzkügelchen (61) oder ein Gemisch aus allen oder jeweils zwei der genannten Stoffe verwendet werden, wobei vorzugsweise Cellulosefasern und/oder ein Gemisch von Cellulosefasern und Kunstharzkügelchen verwendet werden.

10. Verfahren nach nach einem der Ansprüche 7 bis 9, **dadurch gekennzeichnet, dass** während des Aufgiessens des Schlickers (10) die Form (3) in eine Vibration (36) versetzt wird.

## Claims

1. A porous, gas permeable layer substructure (5; 5a, 5b) for a thin, gas impervious layer (89), in particular for use as a functional component in high temperature fuel cells (8), which layer substructure has a smooth surface (50a) which is suitable for an application of the gas impervious layer or a multi-layer system including the gas impervious layer by means of a screen printing method or other coating methods, **characterised in that** the smooth surface is formed by a compacted edge zone (50); **in that** the edge zone and a carrier structure (51) adjacent to this are made from a uniform substance mixture consisting of sinterable particles; **in that** the porosity of the carrier structure is greater than 30 volume percent, preferably greater than 40 volume percent; and **in that** the pore size of the edge zone is smaller than 10 µm, preferably smaller than 3 µm.

2. A substructure for a layer in accordance with claim 1, **characterised in that** the porosity of the edge zone (50) is smaller than 30 volume percent, preferably smaller than 10 volume percent; and **in that** the thickness of the edge zone is smaller than 100 µm, preferably smaller than 30 µm.

3. A substructure for a layer in accordance with claim 1 or claim 2, **characterised in that** it is made up of a first layer (5') including the edge zone (50) and at least one second porous layer (5"), with the layers being sintered to form a cohesive structure and the second layer having a greater porosity than the first.

4. A substructure for a layer in accordance with any of claims 1 to 3, **characterised in that** it is formed in plate shape (5) or **in that** it has a tubular shape (81, 82), with the edge zone preferably forming the outer surface of the tube (81, 82).

5. An electrochemically active element (81, 82; 91, 92), in particular a high temperature fuel cell (8) or an oxygen generator (9) having a substructure (5a, 5b) in accordance with any of claims 1 to 4 and a multi-layer system which comprises an anode layer (55a, 50b), a gas impervious solid electrolyte layer (89) and a cathode layer (50a, 55b), with each of the electrode layers, that is either the anode layer (50b) or the cathode layer (50a), being formed by or applied to the edge zone (50) of the substructure (5b, 5a).

6. An electrochemically active element in accordance with claim 5, **characterised in that** the electrode layer applied to the edge zone (50) substantially consists of the same substance mixture as the substructure.

7. A method for the manufacture of a substructure (5, 5a, 5b) in accordance with any of claims 1 to 4, **characterised in that** at least one slurry (10) is prepared from a powder mixture (11) and a liquid (12, L); **in that** the or a first slurry is poured onto a mould (2, 3, 4) absorbent with respect to the liquid and is solidified to form a uniformly thick layer (5, 5'); **in that** optionally a further layer (5") is applied to the solidified layer (5') with a second or a further slurry; **in that** the intermediate product produced in this manner is dried, removed from the mould and finally sintered,
with the powder mixture including sinterable particles and organic components as pore forming materials and binding agents which go into a volatile form during sintering, and with the liquid, which in particular mainly consists of water, forming a suspension medium for the powder mixture together with at least one additive.

8. A method in accordance with claim 7, **characterised in that** the absorbent mould (3, 4) consists of a porous material (30), in particular gypsum; or **in that** the absorbent mould (2) is formed from an apparatus which comprises an extraction device (21, 22, 23, 24) having an inserted micro-filter film (20).

9. A method in accordance with claim 7 or 8, **characterised in that** cellulose fibres (60), graphite platelets, synthetic resin balls (61) or a mixture of all three or of two each of the said substances are used as the pore forming materials, with preferably cellulose fibres and/or a mixture of cellulose fibres and synthetic resin balls being used.

10. A method in accordance with any of claims 7 to 9, **characterised in that** the mould (3) is set into a vibration (36) during the pouring on of the slurry (10).

## Revendications

1. Sous-couche poreuse, perméable aux gaz (5; 5a, 5b) pour une couche mince imperméable aux gaz (89), en particulier pour l'utilisation comme composant fonctionnel dans des piles à combustible fonctionnant à haute température (8), ladite sous-couche présente une surface lisse (50a) qui convient pour l'application d'une couche étanche aux gaz ou d'un système à couches multiples comprenant la couche étanche aux gaz au moyen de la sérigraphie ou d'autres procédés de revêtement, **caractérisée en ce que** la surface lisse est formée par une zone de bord compactée (50), la zone de bord ainsi qu'une structure de support (51) avoisinant celle-ci sont fabriquées en un mélange de matières unitaires de particules aptes à être frittées, la porosité de la structure de support est supérieure à 30% en vol., de préférence supérieure à 40% en vol. et la grandeur des pores de la zone de bord est inférieure à 10µm, de préférence inférieure à 3µm.

2. Sous-couche pour une couche selon la revendication 1, **caractérisée en ce que** la porosité de la zone de bord (50) est inférieure à 30% en vol., de préférence inférieure à 10% en vol, et **en ce que** l'épaisseur de la zone de bord est inférieure à 100µm, de préférence inférieure à 30µm.

3. Sous-couche pour une couche selon la revendication 1 ou 2, **caractérisée en ce qu'**elle est constituée d'une première couche (5') contenant la zone de bord (50) et d'au moins une deuxième couche poreuse (5"), où les couches sont frittées en une structure connexe, et la deuxième couche a une plus grande porosité que la première.

4. Sous-couche pour une couche selon l'une des revendications 1 à 3, **caractérisée en ce qu'**elle est réalisée en forme de plaque (5) ou bien qu'elle présente un moule tubulaire (81, 82), où la zone de bord forme de préférence la surface extérieure des tubes (81, 82).

5. Elément électro-chimiquement actif (81, 82; 91; 92), en particulier d'une pile à combustible fonctionnant à haute température (8) ou d'un générateur d'oxygène (9), avec une sous-couche (5a, 5b) selon l'une des revendications 1 à 4 et un système à couches multiples qui comprend une couche d'anode (55a, 50b), une couche d'électrolyte solide étanche aux gaz (89) et une couche de cathode (50a, 55b), où chacune des couches d'électrode, c'est-à-dire soit la couche d'anode (50b) soit la couche de cathode (50a) peut être formée par la zone de bord (50) de la sous-couche (5b, 5a) ou peut être appliquée sur celle-ci.

6. Elément électrochimiquement actif selon la revendication 5, **caractérisé en ce que** la couche d'électrode appliquée sur la zone de bord (50) est réalisée sensiblement dans le même mélange de matières que la sous-couche.

7. Procédé de fabrication d'une sous-couche (5, 5a, 5b) selon l'une des revendications 1 à 4, **caractérisé en ce qu'**au moins un enduit (10) en un mélange de poudres (11) et un liquide (12, L) est préparé, **en ce que** le ou un premier enduit est coulé sur un moule (2, 3, 4) apte à aspirer le liquide et, ce faisant, est solidifié en une couche épaisse unitaire (5, 5'), **en ce que** le cas échéant est appliquée sur la couche solidifiée (5') une autre couche (5") avec un deuxième enduit ou enduit supplémentaire, **en ce que** le produit intermédiaire ainsi formé est séché, retiré du moule et enfin fritté,
où le mélange de poudres contient des particules aptes à être frittées et des composants organiques comme formateurs de pores et liants qui, lors du frittage, se transforment en une forme volatile, et où le liquide qui est en particulier constitué essentiellement d'eau, conjointement avec au moins un additif, forme un milieu de suspension pour le mélange de poudres.

8. Procédé selon la revendication 7, **caractérisé en ce que** le moule apte à aspirer (3,4) est constitué d'un matériau poreux (30), en particulier de gypse, ou bien **en ce que** le moule apte à aspirer (2) est formé par un appareil qui comprend une installation d'aspiration (21, 22, 23, 24) avec une feuille de microfiltre insérée (20).

9. Procédé selon la revendication 7 ou 8, **caractérisé en ce que**, comme formateurs de pores, des fibres de cellulose (60), des feuilles de graphite, des billes en résine synthétique (61) ou un mélange de tous ou respectivement de deux des matériaux indiqués sont utilisés, où de préférence des fibres de cellulose et/ou un mélange de fibres de cellulose et de billes en résine synthétique sont utilisés.

10. Procédé selon l'une des revendications 7 à 9, **caractérisé en ce que** pendant la coulée de l'enduit (10), le moule (3) est amené à vibrer (36).
